# EUROPÄISCHE PATENTANMELDUNG

(11) **EP 4 047 797 A1**
(43) Veröffentlichungstag der Anmeldung: **24.08.2022**
(21) Anmeldenummer: 21157788.7
(22) Anmeldetag: 18.02.2021
(51) Int. Cl.: H02K 15/095, H02K 15/12, H02K 3/18, H02K 9/22, H01F 5/06

(54) **VERBESSERUNG DER THERMISCHEN ANBINDUNG VON ELEKTRISCH DURCHFLOSSENEN SPULEN**

(71) Anmelder: Hilti Aktiengesellschaft, 9494 Schaan (LI)
(72) Erfinder: Schaefer, Thomas, 86836 Obermeitingen (DE)
(74) Vertreter: Hilti Aktiengesellschaft Corporate Intellectual Property

(57) **Zusammenfassung**

Verfahren zum Herstellen einer Spulenwicklung auf wenigstens einen Spulenträger eines Elektromotors.

Das Verfahren enthält die Verfahrensschritte:
- Auftragen eines ersten Volumens eines wärmeleitfähigen Materials auf einen ersten Bereich einer ersten Fläche,
- Auftragen des eines zweiten Volumens des wärmeleitfähigen Materials auf einen ersten Bereich einer zweiten Fläche, wobei die erste und zweite Fläche im Wesentlichen senkrecht zueinander angeordnet sind,
- Auftragen einer ersten Windung eines Spulendrahts auf den Spulenträger, wobei die erste Windung des Spulendrahts in das wärmeleitfähige Material des ersten Bereichs der ersten Fläche positioniert/angeordnet ist und wobei ein Abstand, der wenigstens dem Durchmesser des Spulendrahts entspricht, zu der zweiten Fläche eingehalten ist, und
- Auftragen einer zweiten Windung des Spulendrahts in einem Abstand zu der ersten Windung des Spulendrahts in einer ersten Richtung entlang dem ersten Bereich der ersten Fläche, wobei die zweite Windung des Spulendrahts einen Anteil des wärmeleitfähigen Materials positioniert ist, der durch das Auftragen der ersten Windung des Spulendrahts in Richtung verdrängt ist.

## Beschreibung

Die vorliegende Erfindung betrifft ein Verfahren zum Herstellen einer Spulenwicklung auf wenigstens einen Spulenträger eines Elektromotors.

Aus dem Stand der Technik sind unterschiedlichste Elektromotoren bzw. E-Motoren weitestgehend bekannt. Die aus dem Stand der Technik bekannten Elektromotoren enthalten für gewöhnlich und im Wesentlichen einen Stator (auch Ständer genannt), einen Rotor (auch Läufer genannt), einer Antriebswelle sowie einen Kommutator. Darüber hinaus sind auch bürstenlose Elektromotoren ohne Kommutator bekannt. In diesen herkömmlichen Elektromotoren erzeugen stromdurchflossene Spulenwicklungen (oder nur Spulen genannt) Magnetfelder, deren gegenseitige Anziehungs- und Abstoßungskräfte in Bewegung umgesetzt werden. Die Spulenwicklungen zum Erzeugen eines Magnetfelds können in dem Stator und/oder Rotor vorhanden sein. Sowohl der Stator als auch der Rotor benötigen Spulenträger um die ein Spulendraht (für gewöhnlich Kupfer) zum Erzeugen der jeweiligen Spulen gewickelt wird.

Die Spulen von Elektromotoren, die unter anderem in elektrisch betriebenen Werkzeugmaschinen verwendet werden, sind oftmals starken Beschleunigungen oder anderen hohen mechanischen Belastungen ausgesetzt. Darüber hinaus neigen die Spulen in besonders leistungsstarken Werkzeugmaschinen (wie beispielsweise schwere Meißelhammer) relativ viel Wärme zu erzeugen. Um Beschädigungen bzw. technisch bedingte Ausfälle zu vermeiden, muss der Spulendraht der Spulen ausreichend fixiert werden sowie genügend viel Wärme ableiten können.

Zur Fixierung der Spulen werden unter anderem standardisierte Verfahren wie Träufeln, Tauchen, Tauchrollieren, Vergießen, Vakuumvergießen und Verbacken eingesetzt.

Mit der Ausnahme des Verfahrens Verbacken, sind diese Fixierungsverfahren der Spulen kostenintensiv. Des Weiteren weisen diese Fixierungsverfahren den Nachteil auf, dass die Windungen der Spulen die anfallende Wärme nicht effektiv aus der Stator oder Rotor abführen können.

Wiederum sind Spulen, die durch das Verfahren Verbacken fixiert werden, sind nur begrenzt widerstandsfähig gegenüber den Belastungen bei hohen Beschleunigungen oder anderen mechanischen Belastungen.

Aufgabe der vorliegenden Erfindung ist es daher, ein Verfahren zum Herstellen einer Spulenwicklung auf wenigstens einen Spulenträger eines Elektromotors bereitzustellen, welches wenigstens die vorstehend genannten Probleme löst.

Die Aufgabe wird jeweils gelöst durch den Gegenstand des unabhängigen Anspruchs 1. Weitere vorteilhafte Ausgestaltungsformen der Erfindung finden sich in den entsprechenden Unteransprüchen.

Die Aufgabe wird insbesondere gelöst durch ein Verfahren zum Herstellen einer Spulenwicklung auf wenigstens einen Spulenträger eines Elektromotors.

Erfindungsgemäß enthält das Verfahren die Verfahrensschritte:
- Auftragen eines ersten Volumens eines wärmeleitfähigen Materials auf einen ersten Bereich einer ersten Fläche,
- Auftragen des eines zweiten Volumens des wärmeleitfähigen Materials auf einen ersten Bereich einer zweiten Fläche, wobei die erste und zweite Fläche im Wesentlichen senkrecht zueinander angeordnet sind,
- Auftragen einer ersten Windung eines Spulendrahts auf den Spulenträger, wobei die erste Windung des Spulendrahts in das wärmeleitfähige Material des ersten Bereichs der ersten Fläche positioniert/angeordnet ist und wobei ein Abstand, der wenigstens dem Durchmesser des Spulendrahts entspricht, zu der zweiten Fläche eingehalten ist, und
- Auftragen einer zweiten Windung des Spulendrahts in einem Abstand zu der ersten Windung des Spulendrahts in einer ersten Richtung entlang dem ersten Bereich der ersten Fläche, wobei die zweite Windung des Spulendrahts einen Anteil des wärmeleitfähigen Materials positioniert ist, der durch das Auftragen der ersten Windung des Spulendrahts in Richtung verdrängt ist.

Hierdurch wird eine thermische Anbindung zwischen dem Spulenträger und dem Spulendraht erhöht, sodass die in dem elektrisch durchflossenen Spulendraht erzeugte Wärme besser und schneller an den Spulenträger übertragen werden kann. Darüber hinaus wird der Spulendraht besser an dem Spulendraht fixiert, damit die Spulenwicklung widerstandsfähiger gegenüber auftretenden Beschleunigungen oder anderen mechanischen Belastungen ist.

Gemäß einer vorteilhaften Ausführungsform der vorliegenden Erfindung kann der Verfahrensschritt:
- Auftragen eines dritten Volumens des wärmeleitfähigen Materials auf den ersten und zweiten Bereich, wobei das dritte Volumen größer als das erste oder zweite Volumen ist enthalten sein.

Gemäß einer vorteilhaften Ausführungsform der vorliegenden Erfindung kann es möglich sein, dass das wärmeleitfähige Material eine Wärmeleitfähigkeit zwischen 0,8 W/mK und 1,5 W/mK aufweist und der Spulenträger wenigstens teilweise aus Polyamid besteht. Es ist auch möglich, dass anstelle des Polyamids ein anderes geeignetes Polymer Bestandteil des wärmeleitfähigen Materials ist.

Es ist darüber hinaus auch möglich, dass die vorliegenden Erfindung in einem Universalantrieb mit Isolationspapier Anwendung findet.

Entsprechend einer vorteilhaften Ausführungsform der vorliegenden Erfindung kann es möglich sein, dass bei einer verteilten Spulenwicklung des Spulendrahts und einem außen genuteten Spulenträger das wärmeleitende Material zu wenigstens 30% die Wicklungsauflagefläche des Spulenträgers bedeckt.

Gemäß einer vorteilhaften Ausführungsform der vorliegenden Erfindung kann es möglich sein, dass bei einer verteilten Spulenwicklung des Spulendrahts und einem außen genuteten Spulenträger das wärmeleitende Material zu wenigstens 50% die Wicklungsauflagefläche eine Jocheinrichtung bedeckt.

Entsprechend einer vorteilhaften Ausführungsform der vorliegenden Erfindung kann es möglich sein, dass bei einer unregelmäßig gewickelten Spulenwicklung des Spulendrahts und einem außen genuteten Spulenträger das wärmeleitende Material zu wenigstens 10% die Wicklungsauflagefläche der Jocheinrichtung bedeckt.

Gemäß einer vorteilhaften Ausführungsform der vorliegenden Erfindung kann es möglich sein, dass bei einer unregelmäßig gewickelten Spulenwicklung des Spulendrahts und einem außen genuteten Spulenträger das wärmeleitende Material zu wenigstens 40% die Wicklungsauflagefläche des Spulenträgers bedeckt

Entsprechend einer vorteilhaften Ausführungsform der vorliegenden Erfindung kann es möglich sein, dass zwischen 3% bis 20% vom Wickelraum / Nut mit dem wärmeleitfähige Material gefüllt ist.

Gemäß einer vorteilhaften Ausführungsform der vorliegenden Erfindung kann es möglich sein, dass das wärmeleitfähige Material als Klebstoff auf Basis von Epoxidharz hergestellt ist.

Entsprechend einer vorteilhaften Ausführungsform der vorliegenden Erfindung kann es möglich sein, dass das wärmeleitfähige Material als Klebstoff auf Basis von Polyurethane hergestellt ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Ansicht auf einen Elektromotor mit einem Stator und Rotor;
- Figur 2: eine Frontansicht auf einen Stator mit mehreren Spulenträgern und Spulenwicklungen;
- Figur 3: eine Detailansicht auf den Spulenträger mit einem wärmeleitfähigen Material;
- Figur 4: eine Detailansicht auf den Spulenträger mit der Spulenwicklung und dem wärmeleitfähigen Material zu Beginn des Spulenwickelprozesses; und
- Figur 5: eine Detailansicht auf den Spulenträger mit der Spulenwicklung und dem wärmeleitfähigen Material am Ende des Spulenwickelprozesses.

### Ausführungsbeispiele:

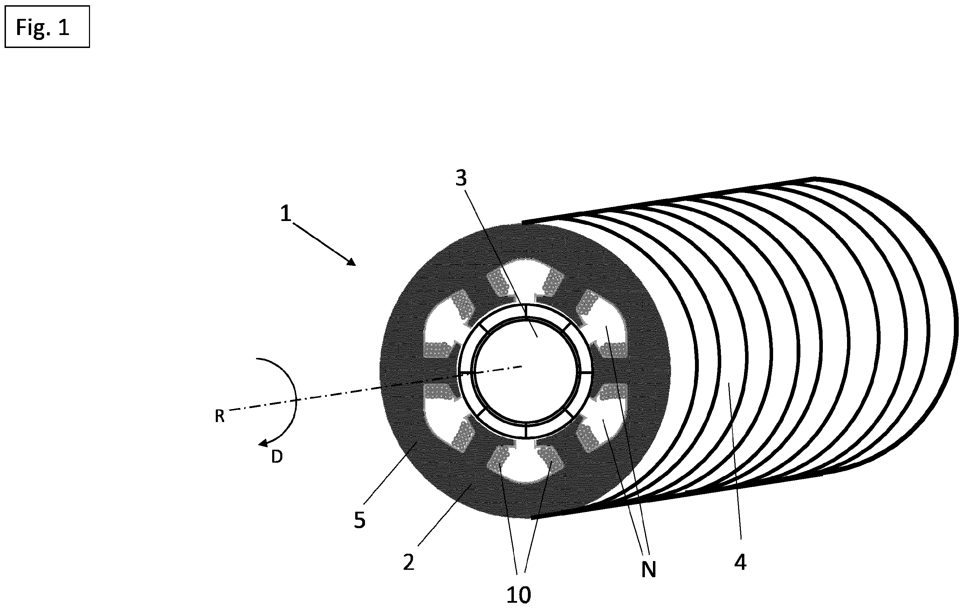

In Figur 1 zeigt einen Elektromotor 1 mit einem Stator 2 und einem Rotor 3. Der Rotor 3 ist dabei als Innenläufer im Inneren des Stators 2 positioniert.

Gemäß einer alternativen Ausführungsform kann der Rotor 3 auch als Außenläufer um den Stator 2 herum positioniert sein. Zum Erzeugen eines Drehmoments dreht sich der Rotor 3 um die Drehachse R in Drehrichtung D relativ zum Stator 2.

Der Elektromotor 1 dient als Antrieb in einer Werkzeugmaschine. Bei der Werkzeugmaschine kann es sich um eine Bohrmaschine, Bohrhammer, Meißelhammer, Säge, Schleifgerät oder dergleichen handeln.

Die Werkzeugmaschine ist in den Figuren nicht gezeigt.

Der Elektromotor 1 enthält dabei im Wesentlichen einen Stator 2, einen Rotor 3 und einen Kommutator.

Der Kommutator ist in den Figuren nicht gezeigt. Gemäß einer alternativen Ausführungsform ist der Elektromotor als bürstenloser Elektromotor ohne Kommutator ausgestaltet.

Der Stator 2 ist durch eine Anzahl an Blechelementen 4 gebildet, vgl. Figur 1. Die einzelnen Blechelemente 4 sind zu einem Stapel aufgeschichtet, sodass ein zylindrisches Blechpaket bzw. ein Statorblechpaket gebildet ist.

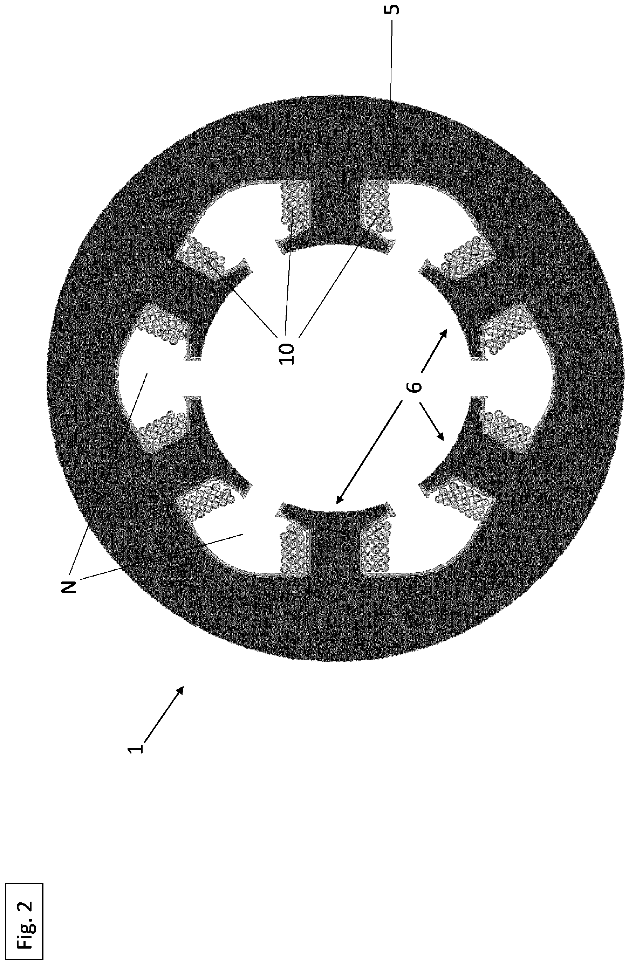

Wie in Figur 1 und 2 gezeigte enthält der als Blechpaket gebildete Stator 2 im Wesentlichen ein Jochelement 5 sowie sechs Spulenträger 6. Der Spulenträger 6 kann auch als Wicklungskörper bezeichnet werden. Das Jochelement 5 ist dabei als kreisrunder Ring ausgestaltet. An einer Innenseite 5a des als Ring ausgestalteten Jochelements 5 sind die sechs Spulenträger 6 in gleichmäßigen Abständen und jeweils als Spulenträgerpaare gegenüberliegend positioniert. Zwischen jeweils zwei Spulenträgern ist eine Nut N enthalten. In dem vorliegenden Ausführungsbeispiel, welche in den Figuren 1 und 2 gezeigt ist, sind drei Spulenträgerpaare, d.h. sechs Spulenträger 6, vorgesehen. Die Spulenträger 6 erstrecken sich dadurch radial in Richtung eines Mittelpunkts des Jochelements 5.

Gemäß eines alternativen Ausführungsbeispiels können auch mehr oder weniger als sechs Spulenträger 6 enthalten sein.

In dem vorliegenden Ausführungsbeispiel ist der Spulenträger 6 als Einzelzahn bzw. Einzelzahnwickelkörper ausgestaltet. Gemäß alternativer Ausführungsbeispiele kann der Spulenträger 6 auch als innengenuteter, außengenuteter, rechteckiger und quadratischer Spulenträger 6 ausgestaltet sein.

Jeder Spulenträger 6 enthält wiederum jeweils einen Steg 7 und einen Polschuh 8. Der Steg 7 kann auch als Zahn oder Polzahn bezeichnet werden, wobei jeder Steg 7 jeweils ein erstes Ende 7a sowie ein zweites Ende 7b enthält. Das zweite Ende 7b des Stegs 7 kann auch als Fuss bezeichnet werden. Wie in Figur 2 gezeigt ist der Polschuh 8 so an dem ersten Ende 7a des Stegs 7 positioniert, dass sich der Polschuh 8 quer zu dem Steg 7 erstreckt. Der Polschuh 8 enthält ein erstes Ende 8a sowie ein zweites Ende 8b, wobei das erste Ende 8a und das zweite Ende 8b den Steg 7 überragen. Das zweite Ende 7b des Stegs 7 ist an der Innenseite des Jochelements 5 positioniert.

Entlang dem ersten bzw. zweiten Ende 8a, 8b des Polschuhs 8, einer ersten und zweiten Außenseite 7c, 7d des Stegs 7 sowie dem Jochelement 5 ist angrenzend an einer ersten Seiten des Spulenträgers ein erster Füllraum 9a und angrenzend an einer zweiten Seite des Spulenträgers ein zweiter Füllraum 9b gebildet. Der erste oder zweite Füllraum 9a, 9b kann auch als Wickelraum bezeichnet werden.

Der erste Füllraum 9a neben der ersten Seite des Spulenträgers 6 und der zweite Füllraum 9b neben der zweiten Seite des Spulenträgers 6 dient zur Aufnahme eines Spulendrahts 10. Der Spulendraht 10 kann auch als elektrischer Leiter, isolierter Draht oder Litze bezeichnet werden und dient als Spule gewickelt ein Magnetfeld zu erzeugen.

Der Spulendraht 10 ist dabei aus Kupfer hergestellt. Alternativ kann der Spulendraht 10 auch aus einer Kupferlegierung oder einer anderen Legierung hergestellt sein. Der Spulendraht 10 in dem vorliegenden Ausführungsbeispiel weist eine kreisrunde Querschnittsfläche auf. Gemäß eines alternativen Ausführungsbeispiels kann der Spulendraht 10 auch eine flache-, ovale- oder quadratische Querschnittsfläche aufweisen.

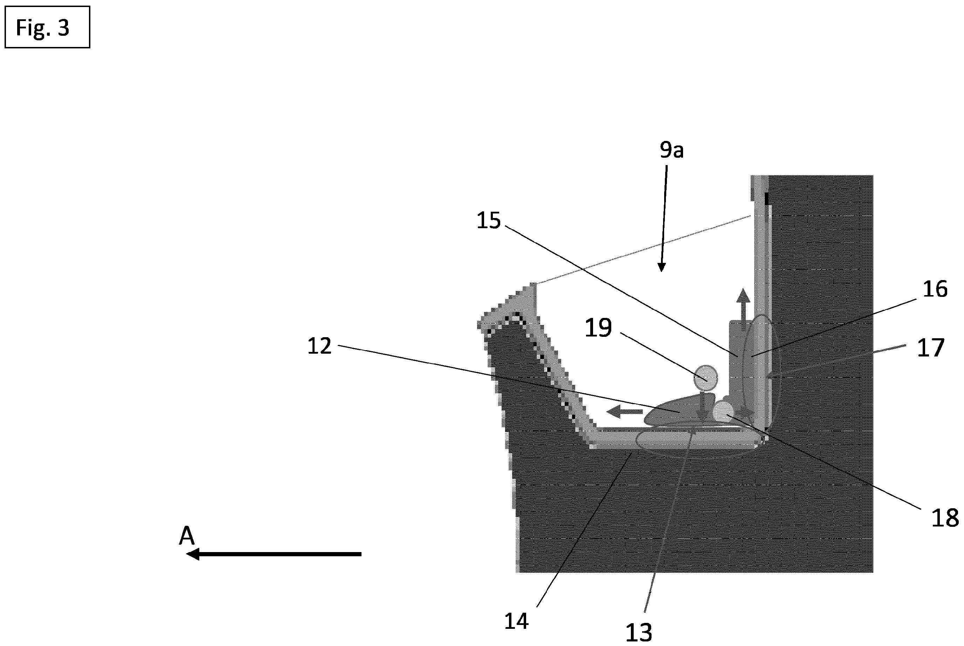

In den Figuren 3 bis 5 ist sind die einzelnen Schritte des Wickelprozesses zum Erzeugen der Spulenwicklung dargestellt.

Zum Erzeugen einer Spule bzw. Spulenwicklung für den Elektromotor 1 wird zunächst ein wärmeleitfähiges Material 11 um bzw. auf den Steg 7 des Spulenträgers 6 aufgetragen.

Wie in Figur 3 ersichtlich wird ein erstes Volumen 12 bzw. eine erste Menge eines wärmeleitfähigen Materials 11 auf eine ersten Bereich 13 einer ersten Fläche 14 aufgetragen. Die erste Fläche 14 befindet sich dabei an dem Steg 7 des Spulenträgers 6. Der erste Bereich 13 ist ein Teilabschnitt an der ersten Fläche 14.

Des Weiteren wird ein zweites Volumen 15 bzw. eine zweite Menge des wärmeleitfähigen Materials 11 auf einen ersten Bereich 16 einer zweiten Fläche 17 aufgetragen. Die zweite Fläche 17 befindet sich an dem Jochelement 5. Der erste Bereich 16 ist wiederum ein Teilabschnitt an der zweiten Fläche 17. Die erste und zweite Fläche 14, 17 sind im Wesentlichen senkrecht zueinander angeordnet.

Das wärmeleitfähige Material 11 in dem dargestellten Ausführungsbeispiel ist in Form eines Klebstoffs auf Basis eines Epoxidharzes ausgeführt. Alternativ kann das wärmeleitfähige Material 11 als Klebstoff auf Basis von Polyurethane oder dergleichen hergestellt sein. Das wärmeleitfähige Material 11 wird in einem flüssigen Zustand auf den Steg 7 des Spulenträgers 6 aufgetragen.

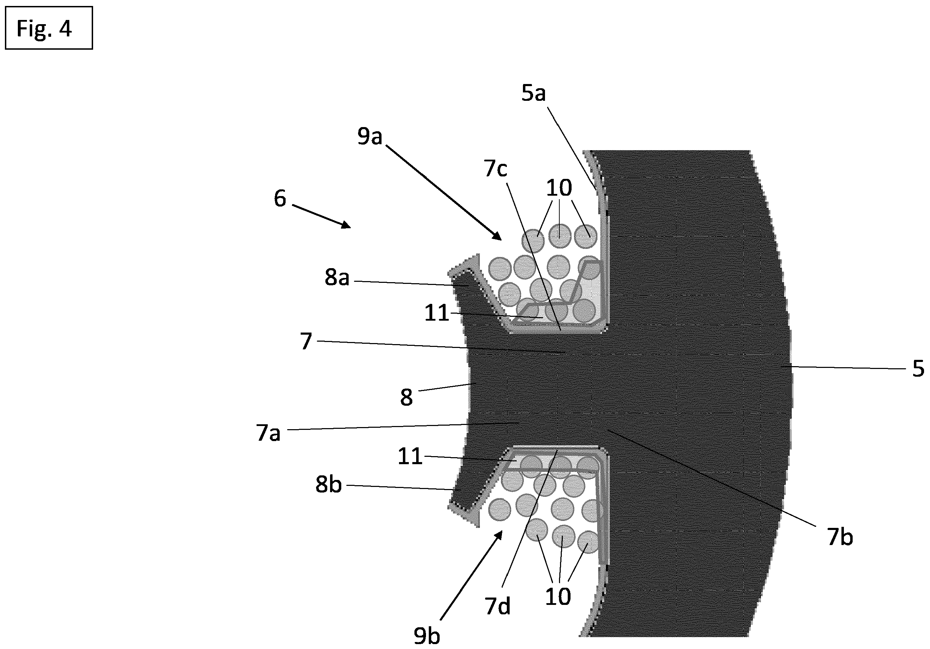

Anschließend und bevor das wärmeleitfähige Material 11 schon vollständig erstarrt ist (d.h. ein fester Körper geworden ist), wird der Spulendraht 10 mit Hilfe einer bestimmten Spulenwickeltechnik in mehreren Lagen um den Steg 7 des jeweiligen Spulenträgers 6 gewickelt, vgl. Figur 4.

Zum Erzeugen der eigentlichen Spulenwicklung wird ein erste Windung des Spulendrahts 10 auf den Spulenträger 6 angelegt. Hierbei wird die erste Windung des Spulendrahts 10 in das wärmeleitfähige Material 11 des ersten Bereichs 13 der ersten Fläche 14 positioniert. Die erste Windung 18 des Spulendrahts 10 wird dabei mit einem Abstand, der wenigstens dem Durchmesser des Spulendrahts 10 entspricht, zu der zweiten Fläche 17 auf den ersten Bereich 16 positioniert.

Anschließend wird eine zweite Windung 19 des Spulendraht 10 in einem Abstand zu der ersten Windung 18 des Spulendraht 10 in einer ersten Richtung A entlang dem ersten Bereich 13 der ersten Fläche 14 angelegt. Die zweite Windung 19 des Spulendraht 10 wird dabei in einen Anteil des wärmeleitfähigen Materials 11 positioniert, der durch das Auftragen der ersten Windung 18 des Spulendrahts 10 in Richtung A verdrängt ist. Wie in Figur 3 zu erkennen ist, drückt die erste Windung 18 des Spulendrahts 10 beim Anlegen an den ersten Bereich 13 das wärmeleitfähige Material 11 teilweise in Richtung A und damit entlang dem Steg 7 des Spulenträgers 6. Die erste Windung 18 des Spulendraht 10 jedoch auch eine gewisse von dem wärmeleitfähigen Material 11 in eine Richtung B und damit zu dem zweiten Bereich 16 an dem Jochelement 5.

Das Wickeln des Spulendrahtes 10 auf den Spulenträger 6 erfolgt damit in Uhrzeigerrichtung. Durch das Wickeln des Spulendrahtes 10 auf den Spulenträger 6 wird das wärmeleitfähige Material 11 relativ gleichmäßig an dem Steg 7 verteilt.

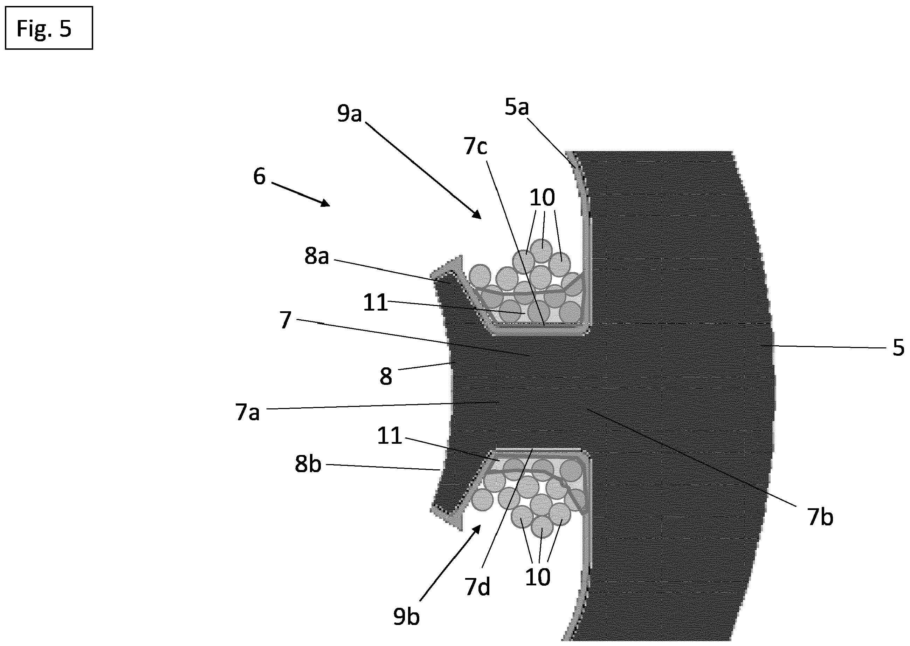

Wie in Figur 4 und 5 ersichtlich wird durch den Wickelprozess des Spulendrahts 10 in das wärmeleitfähige Material 11 gedrückt, sodass der Spulendraht 10 von dem wärmeleitfähigen Material 11 umschlossen bzw. Hohlräume zwischen dem gewickelten Spulendrähten 10 durch das wärmeleitfähige Material 11 aufgefüllt sind.

Gemäß einer alternativen (in den Figuren nicht gezeigte) Ausführungsform wird ein drittes Volumen des wärmeleitfähigen Materials 11 auf den ersten und zweiten Bereich 13, 16 aufgetragen. Das dritte Volumen ist dabei größer als das erste oder zweite Volumen 12, 15.

In Figur 5 ist der Zustand am Ende des Wickelprozesses dargestellt, wobei der Spulendraht 10 relativ fest bzw. eng um den Steg 7 des Spulenträgers 6 gewickelt ist. Das wärmeleitfähige Material 11 umschließt dabei nicht vollständig den Spulendraht 10, sondern lediglich eine ersten und zweite Bahn (oder Wickelschicht) des Spulendrahts 10.

Entsprechend einer alternativen Ausführungsform der vorliegenden Erfindung kann auch eine größere Menge an wärmeleitfähigen Material 11 an den Steg 7 des Spulenträgers 6 vor Beginn des Wickelprozesses aufgetragen werden, sodass ein höherer Anteil (d.h. mehr Bahnen bzw. Wickelschichten) des Wickeldrahtes 10 von dem wärmeleitfähigen Material 11 umschlossen sind und alle Hohlräume in der Spulenwicklung ausgefüllt sind.

In dem vorliegenden Ausführungsbeispiel wird eine Standardwickeltechnik zum Erzeugen einer wilden Spulenwicklung verwendet.

Entsprechend einer alternativen Ausführungsform kann aber auch eine Lagen-, Schablonen-, Linear-, Nadel-, Flyer-, Hairpin-, Direktwickeltechnik zum Erzeugen der Spulenwicklung verwendet werden.

Anstelle der wilden Spulenwicklung bzw. wilden Spulenform kann auch eine konzentrierte, verteilte, orthozyklische, schraubenförmigen, pilgerschritt, bifilare, mehrdrahtige, Kreuz-, Lücken-, konvexe, konische oder konkave Spulenwicklung bzw. Spulenform erzeugt werden.

### Bezugszeichen:

- 1: Elektromotor
- 2: Stator
- 3: Rotor
- 4: Blechelement
- 5: Jochelement
- 5a: Innenseite des Jochelements
- 6: Spulenträger
- 7: Steg
- 7a: erstes Ende des Stegs
- 7b: zweites Ende des Stegs
- 7c: erste Aussenseite des Stegs
- 7d: zweite Aussenseite des Stegs
- 8: Polschuh
- 8a: erstes Ende des Polschuhs
- 8b: zweites Ende des Polschuhs
- 9a: erster Füllraum
- 9b: zweiter Füllraum
- 10: Spulendraht
- 11: wärmeleitfähiges Material
- 12: erstes Volumen
- 13: erster Bereich der ersten Fläche
- 14: erste Fläche
- 15: zweites Volumen
- 16: erster Bereich der zweiten Fläche
- 17: zweite Fläche
- 18: erste Windung
- 19: zweite Windung
- D: Drehrichtung
- R: Drehachse
- N: Nut zwischen Spulenträger

## Patentansprüche

1. Verfahren zum Herstellen einer Spulenwicklung auf wenigstens einen Spulenträger (6) eines Elektromotors (1)
**gekennzeichnet durch** die Verfahrensschritte:
- Auftragen eines ersten Volumens (12) eines wärmeleitfähigen Materials auf einen ersten Bereich (13) einer ersten Fläche (14),
- Auftragen des eines zweiten Volumens (15) des wärmeleitfähigen Materials (11) auf einen ersten Bereich (16) einer zweiten Fläche (17), wobei die erste und zweite Fläche (14, 17) im Wesentlichen senkrecht zueinander angeordnet sind,
- Auftragen einer ersten Windung (18) eines Spulendrahts (10) auf den Spulenträger (6), wobei die erste Windung (18) des Spulendrahts (10) in das wärmeleitfähige Material (11) des ersten Bereichs (13) der ersten Fläche (14) positioniert/angeordnet ist und wobei ein Abstand, der wenigstens dem Durchmesser des Spulendrahts (10) entspricht, zu der zweiten Fläche (17) eingehalten ist, und
- Auftragen einer zweiten Windung (19) des Spulendrahts (10) in einem Abstand zu der ersten Windung (18) des Spulendrahts (10) in einer ersten Richtung (A) entlang dem ersten Bereich (13) der ersten Fläche (14), wobei die zweite Windung (19) des Spulendrahts (10) einen Anteil des wärmeleitfähigen Materials (11) positioniert ist, der durch das Auftragen der ersten Windung (18) des Spulendrahts (10) in Richtung (A) verdrängt ist.

2. Verfahren nach Anspruch 1
**gekennzeichnet durch** den Verfahrensschritt:
- Auftragen eines dritten Volumens des wärmeleitfähigen Materials (11) auf den ersten und zweiten Bereich (14, 17), wobei das dritte Volumen größer als das erste oder zweite Volumen (12, 15) ist.
